# FASCICULE DE BREVET EUROPEEN

(11) **EP 1 116 857 B1**
(45) Date de publication et mention de la délivrance du brevet: **28.07.2004**
(21) Numéro de dépôt: 01490002.1
(22) Date de dépôt: 11.01.2001
(51) Int. Cl.: E06B 9/68

(54) **Installation de manoeuvre d'au moins un volet roulant**
Vorrichtung zur Betätigung wenigstens eines Rolladens
Actuating device for at least one roller shutter

(30) Priorité: 11.01.2000 FR 0000260; 11.01.2000 FR 0000261
(43) Date de publication de la demande: 18.07.2001
(73) Titulaire: Jouvence, sarl, 62136 Lestrem (FR)
(72) Inventeur: Stempniakowski, Tonny, 62840 Laventie (FR)
(74) Mandataire: Hennion, Jean-Claude

(56) Documents cités:
- EP-A- 0 667 440
- EP-A- 0 687 794
- EP-A- 0 744 524
- EP-A- 0 822 313
- DE-U- 29 612 882
- DE-U- 29 904 106

## Description

L'invention se rapporte à une installation de manoeuvre d'au moins un volet roulant.

De plus en plus d'habitations sont équipées de volets roulants qui, lorsqu'ils sont déroulés, obturent chacun une ouverture.

Ainsi, chaque volet roulant forme un élément de protection notamment contre les intrusions.

Pour permettre cet enroulement, le volet roulant est constitué de lames rigides reliées entre elles par des moyens d'articulation.

La manoeuvre de ces volets roulants est généralement réalisée à l'aide d'une sangle ou d'une manivelle mais, depuis quelques années, il est fait appel à une motorisation électrique.

En effet, il existe désormais des moteurs de tailles relativement réduites permettant de les loger dans l'arbre sur lequel s'enroule le volet roulant.

La commande de ces volets roulants peut se faire à l'aide d'un interrupteur commandé manuellement et qui, suivant sa position, alimente le moteur dans un sens ou un autre.

Au lieu de cette commande manuelle qui nécessite de relier le moteur et la commande par des câbles électriques, il est connu de remplacer la liaison entre la commande et le moteur par une télécommande.

Au moteur est donc associée une unité de commande comprenant notamment :
- des moyens pour actionner le moteur dans le sens de la montée,
- des moyens pour actionner le moteur dans le sens de la descente et
- des moyens pour dialoguer avec la télécommande.

Il est connu en outre d'équiper cette unité de commande :
- d'une horloge,
- d'au moins une mémoire et
- d'un moyen pour enregistrer, dans la mémoire précitée, l'ordre de déplacement du volet dans un sens ou dans l'autre en fonction de l'information fournie par l'horloge.

Ainsi, il est possible de programmer l'heure à laquelle les volets roulants sont abaissés ou remontés.

L'opérateur entre dans la mémoire l'ordre de montée ou de descente, cette mémoire étant associée à l'heure à laquelle l'opération est souhaitée.

Lorsque l'heure programmée est atteinte, l'ordre de montée ou de descente est adressé aux moyens de commande du déplacement du volet et le déroulement ou l'enroulement du volet se fait jusqu'à ce que celui-ci soit levé ou baissé totalement.

Pendant cette opération de déplacement du volet, la descente ou la remontée dudit volet est contrôlée par des moyens indépendants de cette programmation.

Cette programmation est intéressante car elle évite de faire chaque jour le même geste, cela auprès de tous les volets.

En outre, en l'absence des occupants de l'habitation, la manoeuvre de volets se fait automatiquement.

Le document EP 0 667 440 décrit une telle installation de manoeuvre d'au moins un volet.

Cette installation de manoeuvre, selon le préambule de la revendication 1, bien qu'intéressante, peut cependant être améliorée.

A cet effet, l'invention a pour objet une installation de manoeuvre d'au moins un volet roulant se déplaçant entre deux positions extrêmes dites haute et basse comprenant une unité de commande du fonctionnement d'un moteur équipant le volet, cette unité de commande comprenant elle-même notamment :
- des moyens pour actionner le moteur dans le sens de la montée,
- des moyens pour actionner le moteur dans le sens de la descente,
- des moyens pour contrôler le déplacement du volet,
- une horloge,
- au moins une mémoire et
- un moyen pour programmer dans le temps un déplacement du volet.

Cette installation étant caractérisée en ce qu'elle comprend :
- un moyen pour, lors de la programmation, associer à l'heure programmée du déplacement du volet, une position dite intermédiaire du volet située entre la position basse et la position haute, et
- un moyen pour, à l'heure prévue, depuis n'importe quelle position du volet, déplacer le volet vers la position intermédiaire programmée.

L'invention sera bien comprise à l'aide de la description ci-après faite à titre d'exemple non limitatif en regard du dessin ci-annexé qui représente schématiquement :

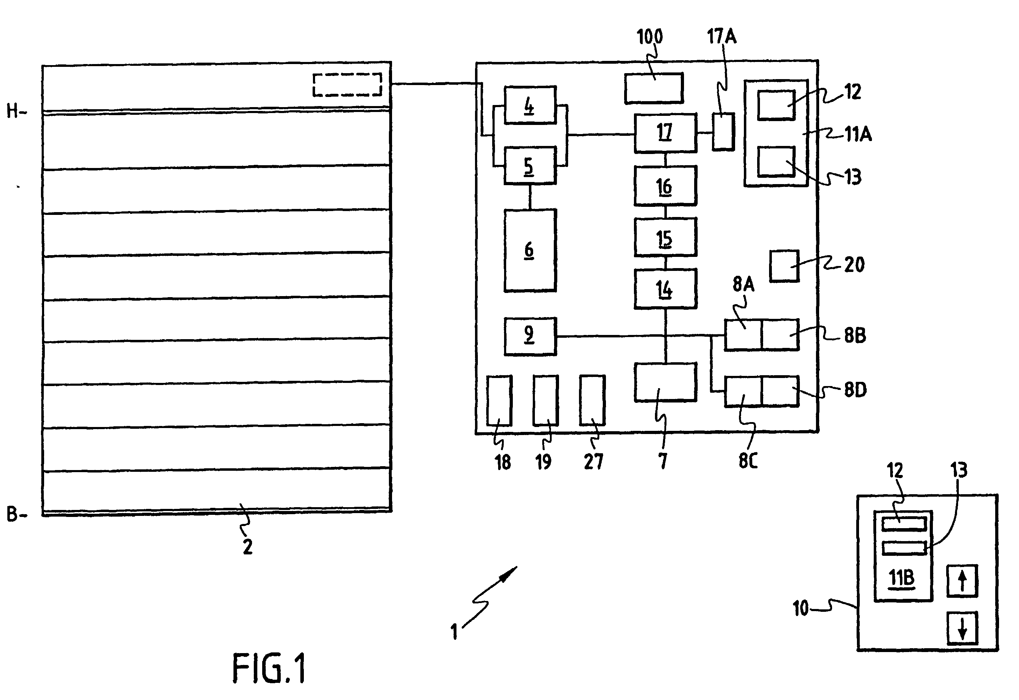

- figure 1 : une installation de manoeuvre sous forme de blocs fonctionnels,
- figure 2 : un jeu d'impulsions pour déterminer la position du volet,
- figure 3 : une vue partielle de la commande d'un volet,
- figure 4 : le principe du compteur sans générateur mécanique.

En se reportant au dessin, on voit une installation 1 de manoeuvre d'au moins un volet 2 roulant se déplaçant entre deux positions extrêmes dites haute et basse comprenant une unité 3 de commande du fonctionnement d'un moteur équipant le volet, cette unité de commande comprenant elle-même notamment :
- dés moyens 4 pour actionner le moteur dans le sens de la montée,
- des moyens 5 pour actionner le moteur dans le sens de la descente,
- des moyens 6 pour contrôler le déplacement du volet,
- une horloge 7,
- au moins une mémoire 8A, 8B, 8C, 8D et
- un moyen 9 pour programmer dans le temps un déplacement du volet.

Classiquement, cette installation comprend avantageusement une télécommande 10 permettant de manoeuvrer à distance le ou les volets.

Sont donc prévus des moyens 11A, 11B pour établir un dialogue entre la télécommande et l'unité de commande située à proximité du moteur entraînant en rotation l'arbre de rotation du volet roulant.

Ces moyens 11A, 11B comprennent au moins un moyen 12, 13 d'identification tel un code.

La télécommande 10 envoie une instruction accompagnée d'un code 12 identifiant le volet et celle des unités de commande correspondant au code réagit aux instructions.

Selon l'invention, cette installation comprend en outre :
- un moyen 14 pour, lors de la programmation, associer à l'heure programmée du déplacement du volet, une position dite intermédiaire du volet située entre la position basse et la position haute et
- un moyen 17 pour, à l'heure prévue, depuis n'importe quelle position du volet, déplacer le volet vers la position intermédiaire.

Lorsque l'heure prévue est atteinte, le volet peut être en une position quelconque.

Le moyen 17 pour déplacer le volet comprend donc en outre :
- un moyen 15 pour, préalablement à son déplacement programmé, connaître la position réelle du volet,
- un moyen 16 pour, en fonction de la position dudit volet, déterminer le sens de déplacement du volet et
- un moyen 17A pour produire le déplacement souhaité.

Ainsi, en affectant une position du volet et non un ordre de commande du sens de déplacement du volet, on peut positionner le volet à la hauteur souhaitée.

Cette solution offre beaucoup plus de souplesse que les solutions antérieures qui visaient simplement à donner un ordre de montée ou de descente.

La position du volet correspond généralement à la position du bord inférieur du tablier.

Cela permet, par exemple en été, de positionner le volet à mi hauteur en milieu de matinée, puis le relever au trois quart en fin d'après midi, en supplément des possibilités d'ouverture ou de fermeture totale.

Pour connaître la position du volet, l'installation comprend au moins un compteur 18, 19 d'impulsions et, de préférence, deux, chacun étant associé à un sens de déplacement du volet.

Le compteur s'incrémente au fur à mesure de son déplacement, de sorte que la valeur du compteur représente la position du volet.

Un générateur 27 d'impulsions, au moins indirectement associé au déplacement du volet, génère les impulsions comptées par le ou les compteurs.

Selon un mode de réalisation, le générateur 27 d'impulsions est constitué d'un dispositif 27A couplé mécaniquement à la rotation de l'arbre sur lequel est enroulé le volet et d'un oscillateur 270 qui génère des impulsions 1000 entre deux impulsions 2000 du dispositif mécanique.

Ainsi, entre deux impulsions produites par le dispositif couplé mécaniquement, on ajoute un jeu d'impulsions à une fréquence plus élevée de sorte que l'on peut définir plus précisément une position intermédiaire.

La figure 2 représente ces impulsions. On voit notamment qu'entre deux impulsions 2000 mécaniques, il existe plusieurs impulsions issues d'un générateur non mécanique qui permettent de préciser la position.

Cela est important car, à chaque rotation de l'arbre d'enroulement, le déplacement effectif du volet est différent d'où une précision mécanique variable. En effet, le diamètre grossit lors de l'enroulement et inversement, il diminue lors de la descente du volet.

Par exemple, le dispositif couplé mécaniquement fournit une impulsion à chaque tour alors que l'oscillateur peut fournir beaucoup plus d'impulsions, le nombre d'impulsions dépendant de la fréquence de l'oscillateur.

Le nombre d'impulsions mécaniques définit globalement la grandeur de la course du volet. L'oscillateur peut repartir de zéro à chaque impulsion d'un nouveau tour mécanique. La position mémorisée lors de l'arrêt est définie par le nombre de tours mécaniques plus la valeur du compteur électronique comptabilisant les impulsions de l'oscillateur.

Dans une autre forme de réalisation, le générateur d'impulsions est une horloge et, de préférence, ce sont les ondes sinusoïdales du courant alternatif alimentant le moteur qui sont exploitées comme impulsions.

Le parcours du volet est, dans ce dernier cas, défini par le temps nécessaire au déplacement.

Cette variante est beaucoup plus intéressante car elle permet de s'affranchir des problèmes mécaniques que pourraient présenter ces compteurs couplés mécaniquement à la rotation du tambour sur lequel s'enroule le volet.

Le temps de montée est différent du temps de descente et ces temps, ou indirectement les nombres d'impulsions correspondantes, sont mémorisés.

C'est notamment pour cette raison que l'on utilise deux compteurs 17, 19.

La valeur de chaque compteur évolue entre une valeur minimale et une valeur maximale correspondant aux positions extrêmes.

Lorsque le volet se déplace, on incrémente le compteur correspondant. A l'arrêt, on calcule par une règle appropriée la valeur du deuxième compteur.

Est donc prévu un moyen 100, notamment de calcul, permettant de passer d'un compteur à l'autre.

Lorsqu'on se déplace dans un sens, on utilise un compteur et si on change de sens, l'installation calcule la valeur du deuxième compteur et on incrémente celui-ci.

Pour simplifier les calculs, la valeur minimale de chaque compteur sera de préférence supérieure à zéro.

De ce fait, on obtient toujours des valeurs positives.

Si la mémorisation des ordres peut se faire en introduisant l'heure souhaitée, de préférence, celle-ci fera appel au départ d'un chronomètre qui déclenche la recherche de la position souhaitée vingt quatre heures plus tard ou alors on utilise une horloge.

A chaque emplacement mémoire est associée une mémoire 200 dans laquelle est indiquée l'heure de l'événement et la position du volet à atteindre.

Un dispositif de comparaison entre l'heure réelle et celle mise en mémoire déclenche le processus de déplacement du volet en sa position programmée lorsqu'il y a identité des deux valeurs.

L'unité de commande comprendra avantageusement au moins quatre emplacements mémoires 8A, 8B, 8C, 8D dites de position.

Deux emplacements 8A, 8B mémoires sont prévus pour positionner le volet en position extrêmes haute ou basse et les deux autres emplacements mémoires 8C,8D pour les positions intermédiaires.

La programmation se déroule de la manière suivante :

Pour programmer les positions extrêmes, haute ou basse, l'opérateur actionne une touche mémorisation, puis la touche indiquant la destination haute ou basse du volet, c'est à dire la touche du choix du sens de déplacement.

Dès que cette position extrême est atteinte, la position dudit volet est mise dans la mémoire considérée.

Pour la première position intermédiaire, l'opérateur actionne toujours la touche mémorisation, puis la touche indiquant la destination haute ou basse du volet, c'est à dire la touche du choix du sens de déplacement, puis stoppe le volet en position requise.

Cette succession d'actions conduit à mémoriser la valeur souhaitée dans une des deux mémoires, celle-ci dépendant du sens de déplacement du volet.

Si on recommence quelques temps plus tard la même séquence d'opérations sans changer le sens de déplacement du volet, le contenu de la mémoire intermédiaire précitée sera remplacée par la nouvelle consigne.

Pour mémoriser la deuxième position intermédiaire, il faut faire l'opération précitée, mais en prenant soin d'utiliser l'autre sens de déplacement du volet.

Dans certains cas, la touche mémorisation sera maintenue enfoncée jusqu'à appui de la touche du sens de déplacement du volet concerné.

L'appui de cette touche mémorisation a pour effet de modifier le code du volet transmis par la télécommande.

Cette modification, reconnue par le récepteur lui indique qu'il faut mémoriser la position d'arrêt du volet. La mémorisation se fait au moment où le volet s'arrête.

Avantageusement, l'unité de commande comprend un moyen 20 pour suspendre les effets de la programmation au moins des mémoires liées aux positions haute et basse et, de préférence, également aux positions intermédiaires.

Ainsi, par exemple, le week-end, la remontée automatique des volets roulants pourra être suspendue.

De préférence, lors de l'installation, ce moyen pour suspendre sera activé et devra alors être désactivé pour la première mémorisation.

Cela évite que les mémoires précitées pouvant contenir des données erronées actionnent les volets de manière intempestive. Chaque unité de commande contrôle donc le déplacement d'un volet et il y a autant d'unités de commande que de volets motorisés.

Avantageusement, l'installation qui comprend plusieurs unités de commande comprend, pour chaque unité de commande, d'une part, un moyen 12 d'identification propre et un moyen 13 d'identification commun à plusieurs volets et chaque télécommande comprend donc un moyen 12 d'identification correspondant à son propre volet et un second moyen 13 d'identification lié à un groupe de volets.

Chacun des volets peut avoir différentes adresses (ou moyens d'identifications) correspondant à d'autres volets, par exemple le volet un peut réagir à un ordre destiné au volet sept.

On peut former ainsi des groupes ou des sous-groupes de volets. Un code sécurisé permet d'éviter que les ordres pour les volets d'une maison soient interprétés par les volets d'une autre maison.

Ainsi, une télécommande peut actionner le volet auquel elle est associée ou un groupe de volets.

Le moyen d'identification est introduit par l'opérateur dans une mémoire.

Ce moyen d'identification comprend un code choisi par l'opérateur, il s'agit d'un nombre complexe et/ou crypté et une succession de chiffres correspondant au numéro du volet.

Pour une remise à zéro de l'unité de commande, il faut nécessairement que deux actions se produisent et ces deux actions ne peuvent être réalisées par un seul individu.

Un individu appuie sur un bouton reset de l'unité de commande, tandis que l'autre rétablit l'alimentation secteur.

Les deux points de manoeuvre pour cette mise à zéro sont distants d'une valeur supérieure à l'amplitude maximale entre les deux mains d'un individu écartant les bras, par exemple, de l'ordre de deux mètres.

Cela évite une erreur de manipulation.

Ainsi, on obtient un produit qui est simple d'installation.

La figure 3 représente, partiellement, la commande de déplacement du volet en utilisant des moyens non mécaniques et non liés à un mouvement du volet ou de l'arbre du moteur.

En regard des figures 3 et 4, on va expliquer ci-après le processus de positionnement du volet sans que cela nécessite un compteur lié mécaniquement à la rotation du tambour portant le volet ou par l'utilisation de capteur de position.

Pour le déplacement du volet, on fait donc appel à un procédé de contrôle.

L'élément de fermeture se déplace entre deux positions extrêmes, dites position haute H et position basse B.

L'unité 3 de commande comprend notamment des moyens 505 pour détecter un surcouple par surveillance du déphasage courant/tension du moteur.

Cette unité de commande pourrait être pilotée par une télécommande reliée par une liaison filaire mais, de préférence, elle est pilotée par une transmission sans fil, telle une transmission hertzienne ou optique.

Pour le contrôle du déplacement du volet :
- à chacun des deux sens de déplacement du volet, on affecte un compteur l'un dit de descente 506 et l'autre de montée 507,
- on détermine, à l'aide d'une horloge 508, au moins indirectement, d'une part, le temps nécessaire pour passer de la position haute à la position basse, appelé temps de descente, et, d'autre part, le temps nécessaire pour passer de la position basse à la position haute, appelé temps de montée,
- on mémorise, au moins indirectement, le temps de descente dans une mémoire 509 de descente et le temps de montée dans une mémoire 510 de montée,
- à chaque déplacement de l'élément de fermeture et selon le sens de déplacement, on incrémente le compteur 506/507 correspondant,
- au moins à chaque arrêt, on calcule mathématiquement, par une relation mathématique telle une relation de trois, la valeur qui devrait figurer dans l'autre compteur pour une position de l'élément de fermeture identique,
- lors du déplacement suivant et selon le sens de ce déplacement, on incrémente le compteur correspondant et
- on arrête le déplacement lorsque le compteur atteint une valeur prédéterminée au plus égale à celle mémorisée.

Avantageusement, à chaque démarrage du moteur, on applique un facteur de correction pour tenir compte de l'inertie du volet.

On applique un facteur de correction d'inertie pour le sens de montée et un facteur de correction différent pour le sens de descente.

Selon l'invention, pour déterminer les temps de montée et/ou de descente, par émission d'une séquence de commande logique :
- on amène l'élément de fermeture vers l'une dite première des butées de manière à détecter un premier-surcouple, on initialise alors la procédure de détermination des temps de montée et descente,
- on mesure le temps nécessaire pour déplacer l'élément de fermeture vers l'autre butée dite seconde et détecter un deuxième surcouple de sorte à déterminer l'un des deux temps de montée et descente,
- on déplace à nouveau l'élément de fermeture le volet en sens contraire vers la butée première jusqu'à détection d'un troisième surcouple de sorte à déterminer l'autre des deux temps de montée et descente.

Pour des raisons techniques, le temps de montée et descente est une valeur qui correspond au nombre d'impulsions produites par une horloge lors de la montée ou la descente.

Avantageusement, la valeur mémorisée des temps de montée et descente est égale au nombre d'impulsions mesurées, minimisées d'une quantité prédéterminée de manière qu'en principe, le volet n'arrive jamais totalement en butée et en état de compression.

La fréquence des impulsions est constante et ne dépend pas du nombre de tours de l'arbre ou du tambour portant le volet.

Avantageusement, on utilise la fréquence d'oscillations de l'alimentation secteur comme horloge de référence pour calculer les temps de montée et descente.

Ainsi, avec ce procédé, il n'est plus nécessaire de faire appel à un moyen directement couplé par une liaison mécanique au déplacement de l'élément de fermeture.

On s'affranchit ainsi des problèmes mécaniques.

L'utilisation de la fréquence du signal sinusoïdal de l'alimentation permet de contrôler l'élément de fermeture avec suffisamment de précision, la sécurité de fin de course étant toujours contrôlée par le moyen de détection du surcouple.

Il peut se produire une dérive mais qui n'a pas de conséquence sur le fonctionnement, sauf à repositionner le compteur haut et bas en fonction des points hauts et bas.

En effet, lorsque cette détection de surcouple se produit avant que le compteur atteigne la valeur mémorisée, cela signifie que la dérive est trop importante ou qu'il y a un obstacle prématuré.

Ce procédé de contrôle du déplacement du volet préserve donc la fonction d'arrêt sur obstacle prématuré qui est assurée par les moyens 505 de détection de surcouple.

Lorsqu'un surcouple est détecté alors que le compteur n'a pas atteint l'une des valeurs mémorisées, le compteur se voit affecter la valeur maximale mémorisée et le compteur opposé, la valeur correspondante qui lui aurait été affecté selon le mode de calcul du type règle de trois de sorte que le déplacement du volet ne peut se faire qu'en sens opposé du sens suivant lequel le blocage s'est produit.

Si l'arrêt est lié à la dérive, le fait d'affecter au compteur la valeur maximale revient à recaler le système.

Si l'arrêt est lié à un obstacle, à la prochaine mise en service, quand le volet s'arrêtera en butée haute ou basse, le système se recalera.

Les moyens pour la mise en oeuvre du procédé comprennent outre l'élément de fermeture tel un volet, le moteur et les moyens 505 pour détecter un surcouple par surveillance du déphasage courant/tension du moteur :
- un compteur 507, dit de montée, auquel est associée une mémoire 510 dite de montée,
- un compteur 506, dit de descente, auquel est associée une mémoire 509 dite de descente,
- une horloge 508,
- des moyens 520 pour déterminer au moins indirectement d'une part le temps nécessaire, pour passer de la position haute à la position basse, appelé temps de descente et, d'autre part, le temps nécessaire, pour passer de la position basse à la position haute, appelé temps de montée,
- un moyen 521 pour, à chaque déplacement de l'élément de fermeture et selon le sens de déplacement, incrémenter le compteur correspondant,
- un moyen 522 pour, au moins à chaque arrêt, calculer mathématiquement, par exemple, par une relation de trois, la valeur qui devrait figurer dans l'autre compteur pour une position du volet identique.

Au moins deux mémoires 8C, 8D permettant de mémoriser les positions intermédiaires du volet.

Ces mémoires contiendront un indicatif du temps de déplacement des volets.

Les moyens de mise en oeuvre comprennent également un moyen 523 pour appliquer un facteur de correction d'inertie pour le sens de montée et un facteur de correction différent pour le sens de descente.

Plusieurs possibilité sont offertes.

Par exemple, le compteur est déclenché avec un temps de latence ou alors on applique un coefficient correcteur multiplicatif.

On parvient ainsi à piloter un volet sans qu'il soit nécessaire de faire appel à des contacts.

Cela permet de réduire les coûts de production.

Un autre avantage est lié au fait que, lors de l'initialisation, les compteurs contiennent une valeur minimale supérieure à zéro de sorte que, lors des calculs de règles de tiers, il n'y a pas de risque d'obtenir une valeur négative.

La figure 4 montre le principe de l'installation.

Les compteurs sont mis, par exemple, à une valeur égale à 2000.

Le volet part du haut et recherche le point bas.

Il mémorise une course égale à Y minorée d'une valeur, par exemple, 300 millisecondes, ce qui évitera chaque fois d'arriver en butée.

Il repart en sens inverse pour mémoriser la course X moins 300 millisecondes.

La flèche en pointillé montre la conversion d'un compteur à un autre.

Lorsqu'il se produit une panne de courant, on compare les heures mémorisées avec l'heure courante et on déplace le volet à la position inscrite dans la première mémoire où l'heure est inférieure à celle courante.

Pour limiter les calculs de conversion, on relit dans toutes les cases mémoires RAM associées à l'horloge, chaque minute à partir de l'heure courante et en arrière, puis, dès qu'une position est inscrite, on y positionne le volet.

## Revendications

1. Installation (1) de manoeuvre d'au moins un volet (2) roulant se déplaçant entre deux positions extrêmes dites haute et basse comprenant une unité (3) de commande du fonctionnement d'un moteur équipant le volet, cette unité de commande comprenant elle même notamment :
- des moyens (4) pour actionner le moteur dans le sens de la montée,
- des moyens (5) pour actionner le moteur dans le sens de la descente,
- des moyens (6) pour contrôler le déplacement du volet,
- une horloge (7),
- au moins une mémoire (8A, 8B, 8C, 8D ) et
- un moyen (9) pour programmer dans le temps un déplacement du volet,
cette installation étant **CARACTERISEE en ce qu'**elle comprend en outre :
- un moyen (14) pour, lors de la programmation, associer à l'heure programmée du déplacement du volet, une position dite intermédiaire du volet située entre la position basse et la position haute et
- un moyen (17) pour, à l'heure prévue depuis n'importe quelle position du volet, déplacer le volet vers la position intermédiaire.

2. Installation selon la revendication 1 **caractérisée en ce que** le moyen (17) pour déplacer le volet comprend en outre :
- un moyen (15) pour, préalablement à son déplacement programmé, connaître la position réelle du volet,
- un moyen (16) pour, en fonction de la position dudit volet, déterminer le sens de déplacement du volet et
- un moyen (17A) pour produire le déplacement souhaité.

3. Installation selon la revendication 1 **caractérisée en ce qu'**elle comprend au moins un compteur (18, 19) d'impulsions et **en ce qu'**un générateur (27) d'impulsions, au moins indirectement associé au déplacement du volet, génère des impulsions pour le compteur.

4. Installation selon la revendication 3 **caractérisée en ce que** le générateur d'impulsions (27) est constitué par un dispositif (27A) couplé mécaniquement à la rotation de l'arbre sur lequel est enroulé le volet et un oscillateur (270) générant des impulsions entre les impulsions du dispositif (27).

5. Installation selon la revendication 3 **caractérisée en ce que** le générateur d'impulsions est une horloge (508).

6. Installation selon la revendication 5 **caractérisée en ce que** ce sont les ondes sinusoïdales du courant alternatif alimentant le moteur qui sont exploitées comme impulsions.

7. Installation selon la revendication 1 **caractérisée en ce que** l'unité de commande comprend au moins quatre emplacements mémoires (8A,8B,8C,8D) dits de position, deux emplacements mémoires étant prévus pour positionner le volet en position haute ou basse et deux autres emplacements mémoires étant prévus pour les positions intermédiaires.

8. Installation selon la revendication 7 **caractérisée en ce qu'**à chaque emplacement mémoire est associé un moyen (200) pour déclencher un chronomètre qui, atteignant une valeur prédéterminée, engage le processus de déplacement du volet en sa position programmée

9. Installation selon la revendication 7 **caractérisée en ce que** l'unité de commande comprend un moyen (20) pour suspendre les effets de la programmation au moins des mémoires liées aux positions haute et basse.

10. Installation selon la revendication 1 **caractérisée en ce qu'**elle comprend, pour chaque unité de commande, d'une part, un moyen (12) d'identification propre et un moyen (13) d'identification commun à plusieurs volets et chaque télécommande comprend un moyen (12) d'identification correspondant à son propre volet et un second moyen (13) d'identification lié à un groupe de volets.

11. Installation selon la revendication 5 ou 6 **caractérisée en ce qu'**elle comprend :
- un compteur (507), dit de montée, auquel est associée une mémoire (510) dite de montée,
- un compteur (506), dit de descente, auquel est associée une mémoire (509) dite de descente,
- une horloge (508),
- des moyens (520) pour déterminer au moins indirectement d'une part le temps nécessaire, pour passer de la position haute à la position basse, appelé temps de descente et, d'autre part, le temps nécessaire, pour passer de la position basse à la position haute, appelé temps de montée,
- un moyen (521) pour, à chaque déplacement de l'élément de fermeture et selon le sens de déplacement, incrémenter le compteur correspondant,
- un moyen (522) pour, au moins à chaque arrêt, calculer mathématiquement, par exemple, par une relation de trois, la valeur qui devrait figurer dans l'autre compteur pour une position du volet identique.
- au moins deux mémoires (8C, 8D) pour mémoriser les positions intermédiaires des volets.

## Patentansprüche

1. Vorrichtung (1) zur Betätigung mindestens eines Rolladens (2), der sich zwischen zwei Endpositionen, obere und untere Position genannt, bewegt, mit einer Einheit (3) zum Steuern des Betriebs eines Motors, mit dem der Rolladen ausgestattet ist, wobei diese Steuereinheit selbst insbesondere folgendes umfaßt:
- Mittel (4) zum Betätigen des Motors in die Hubrichtung,
- Mittel (5) zum Betätigen des Motors in die Senkrichtung,
- Mittel (6) zum Steuern der Bewegung des Rolladens,
- einen Taktgeber (7),
- mindestens einen Speicher (8A, 8B, 8C, 8D) und
- ein Mittel (9) zum Einprogrammieren Zeit der Bewegung des Rolladens,
wobei diese Vorrichtung **dadurch gekennzeichnet, daß** sie ferner folgendes umfaßt:
- ein Mittel (14), um beim Programmieren der programmierten Uhrzeit der Bewegung des Rolladens eine sogenannte Zwischenposition des Rolladens zuzuweisen, die zwischen der unteren Position und der oberen Position liegt und
- ein Mittel (17), um zur vorgesehenen Uhrzeit ausgehend von jeder beliebigen Position des Rolladens diesen Rolladen zur Zwischenposition zu bewegen.

2. Vorrichtung nach Anspruch 1, **dadurch gekennzeichnet, daß** das Mittel (17) zum Bewegen des Rolladens ferner folgendes umfaßt:
- ein Mittel (15), um vor seinem programmierten Bewegen die tatsächliche Position des Rolladens zu kennen,
- ein Mittel (16), um in Abhängigkeit von der Position des Rolladens die Bewegungsrichtung des Rolladens zu bestimmen und
- ein Mittel (17A), um die gewünschte Bewegung zu erzeugen.

3. Vorrichtung nach Anspruch 1, **dadurch gekennzeichnet, daß** sie mindestens einen Impulszähler (18, 19) umfaßt, und dadurch, daß ein Impulsgenerator (27), der mindestens indirekt der Bewegung des Rolladens zugewiesen ist, Impulse für den Zähler erzeugt.

4. Vorrichtung nach Anspruch 3, **dadurch gekennzeichnet, daß** der Impulsgenerator (27) aus einer Vorrichtung (27A) besteht, die mechanisch mit der Drehung der Welle gekoppelt ist, auf die der Rolladen aufgerollt wird, und aus einem Oszillator (270), der Impulse zwischen den Impulsen der Vorrichtung (27) erzeugt.

5. Vorrichtung nach Anspruch 3, **dadurch gekennzeichnet, daß** der Impulsgenerator ein Taktgeber (508) ist.

6. Vorrichtung nach Anspruch 5, **dadurch gekennzeichnet, daß** es die Sinuswellen des Wechselstroms, der den Motor versorgt, sind, die als Impulse genutzt werden.

7. Vorrichtung nach Anspruch 1, **dadurch gekennzeichnet, daß** die Steuereinheit mindestens 4 gespeicherte Stellen (8A, 8B, 8C, 8D), Positionsstellen genannt, umfaßt, wobei zwei Speicherstellen vorgesehen sind, um den Rolladen in Hochstellung oder Tiefstellung zu positionieren, und zwei weitere Speicherstellen für die Zwischenstellungen vorgesehen sind.

8. Vorrichtung nach Anspruch 7, **dadurch gekennzeichnet, daß** jeder Speicherstelle ein Mittel (200) zum Auslösen eines Zeitmessers zugewiesen ist, der, wenn er einen vorausbestimmten Wert erreicht, den Prozeß des Bewegens des Rolladens in seine programmierte Stellung auslöst.

9. Vorrichtung nach Anspruch 7, **dadurch gekennzeichnet, daß** die Steuereinheit ein Mittel (20) umfaßt, um die Wirkungen der Programmierung mindestens der Speicher, die mit der Hochstellung und der Tiefstellung verbunden sind, aufzuheben.

10. Vorrichtung nach Anspruch 1, **dadurch gekennzeichnet, daß** sie für jede Steuereinheit einerseits ein Mittel (12) zur eigentlichen Identifikation und ein Mittel (13) zur Identifikation, das allen Rolläden gemeinsam ist, umfaßt, und jede Fernbedienung ein Mittel (12) zur Identifikation umfaßt, das ihrem eigenen Rolladen entspricht, und ein zweites Mittel (13) zur Identifikation, das mit einer Gruppe von Rolläden verbunden ist.

11. Vorrichtung nach Anspruch 5 oder 6, **dadurch gekennzeichnet, daß** sie folgendes umfaßt:
- einen Zähler (507), Hubzähler genannt, dem ein Speicher (510), Hubspeicher genannt, zugewiesen ist,
- einen Zähler (506), Senkzähler genannt, dem ein Speicher (509), Senkspeicher genannt, zugewiesen ist,
- einen Taktgeber (508),
- Mittel (520) zum zumindest indirekten Bestimmen einerseits der erforderlichen Zeit zum Übergehen von der Hochstellung auf die Tiefstellung, Senkzeit genannt, und andererseits der erforderlichen Zeit zum Übergang von der Tiefstellung auf die Hochstellung, Hubzeit genannt,
- ein Mittel (521), um bei jeder Bewegung des Verschließelements und gemäß einer Bewegungsrichtung den entsprechenden Zähler zu inkrementieren,
- ein Mittel (522), um mindestens bei jedem Stoppen mathematisch zum Beispiel durch eine Dreierrelation den Wert zu bestimmen, der im anderen Zähler für eine identische Stellung des Rolladens stehen müßte,
- mindestens zwei Speicher (8C, 8D) zum Speichern der Zwischenstellungen der Rolläden.

## Claims

1. Device (1) for actuating at least one roller shutter (2) which moves between two extreme positions, called top and bottom, comprising a unit (3) controlling the operation of a motor with which the shutter is equipped, this control unit itself in particular comprising the following:
- means (4) to activate the motor in the raising direction;
- means (5) to activate the motor in the lowering direction;
- means (6) to control the movement of the shutter;
- a clock (7)
- at least one memory (8A, 8B, 8C, 8D), and
- a means (9) to programme in time a movement of the shutter, this device being **characterised in that** it further comprises:
- a means (14) in order, when programming, to associate the time programmed for movement of the shutter, what is called an intermediate position of the shutter located between the bottom position and the top position, and
- a means (17) in order, at the time planned from any position of the shutter, to move the shutter towards the intermediate position.

2. Device according to Claim 1, **characterised in that** the means (17) to move the shutter also comprises:
- a means (15) in order, prior to its programmed movement, to find out the real position of the shutter;
- a means (16) in order, in relation to the position of the said shutter, to determine the direction of movement of the shutter, and
- a means (17A) to produce the required movement.

3. Device according to Claim 1, **characterised in that** it comprises at least one pulse counter (18, 19) and **in that** a pulse generator (27), at least indirectly associated with the movement of the shutter, generates pulses for the counter.

4. Device according to Claim 3, **characterised in that** the pulse generator (27) is made up of a device (27A) mechanically coupled to the rotation of the shaft on which the shutter is wound and an oscillator (270) generating pulses between the pulses of the device (27).

5. Device according to Claim 3, **characterised in that** the pulse generator is a clock (508).

6. Device according to Claim 5, **characterised in that** the sinusoidal waves of the alternating current supplying the motor are used as pulses.

7. Device according to Claim 1, **characterised in that** the control unit has at least four memory locations (8A, 8B, 8C, 8D) called position locations, two memory locations being designed for positioning the shutter in the top or bottom position and two other memory locations being designed for the intermediate positions.

8. Device according to Claim 7, **characterised in that**, associated with each memory location, there is a means (200) to trigger off a chronometer which, on reaching a predetermined figure, engages the shutter movement process in its programmed position.

9. Device according to Claim 7, **characterised in that** the control unit has a means (20) to suspend the effects of the programming at least of the memories connected with the top and bottom positions.

10. Device according to Claim 1, **characterised in that** it includes, for each control unit, on the one hand, a means (12) of individual identification and a means (13) of identification common to several shutters and each remote control has a means (12) of identification corresponding to its own shutter and a second means (13) of identification connected to a group of shutters.

11. Device according to Claim 5 or 6, **characterised in that** it comprises:
- a meter (507) called the raising meter, with which a memory (510), called the raising memory, is associated;
- a meter (506), called the lowering meter, with which a memory (509), called the lowering meter, is associated;
- a clock (508);
- means (520) of determining at least indirectly on the one hand the time required to change from the top position to the bottom position, called the lowering time, and, on the other hand, the time required to change from the bottom position to the top position, called the raising time;
- a means (521) in order, with each movement of the closing part and depending on the direction of movement, to increment the corresponding meter;
- a means (522) in order, at least with each stop, to calculate mathematically, for example by a relation of three, the figure which should appear in the other meter for an identical shutter position.;
- at least two memories (8C, 8D) to memorise the intermediate positions of the shutters.
